# EUROPÄISCHE PATENTSCHRIFT

(11) **EP 3 418 668 B1**
(45) Veröffentlichungstag und Bekanntmachung des Hinweises auf die Patenterteilung: **08.07.2020**
(21) Anmeldenummer: 18174544.9
(22) Anmeldetag: 28.05.2018
(51) Int. Cl.: F28F 9/02, B60H 1/22, F16L 37/08, F24H 1/12, F24H 3/08, F28D 7/12

(54) **WÄRMETAUSCHERANORDNUNG**
HEAT EXCHANGER ASSEMBLY
DISPOSITIF ÉCHANGEUR THERMIQUE

(30) Priorität: 07.06.2017 DE 102017112530
(43) Veröffentlichungstag der Anmeldung: 26.12.2018
(73) Patentinhaber: Eberspächer Climate Control Systems GmbH & Co. KG, 73730 Esslingen (DE)
(72) Erfinder: Humburg, Michael, 73035 Göppingen (DE)
(74) Vertreter: Ruttensperger Lachnit Trossin Gomoll

(56) Entgegenhaltungen:
- EP-A1- 2 778 300
- DE-A1- 10 155 844
- DE-A1-102004 045 061
- DE-A1-102008 037 680
- DE-A1-102013 223 241
- DE-U1- 20 011 475
- US-A- 5 169 178
- US-A- 5 271 646
- US-A- 5 332 268
- US-A- 5 593 187

## Beschreibung

Die vorliegende Erfindung betrifft eine Wärmetauscheranordnung, die insbesondere bei einem Fahrzeugheizgerät eingesetzt werden kann, um beispielsweise im Verbrennungsbetrieb generierte Wärme auf ein die Wärmetauscheranordnung durchströmendes Wärmeträgermedium, insbesondere ein flüssiges Wärmeträgermedium, zu übertragen.

Eine aus der DE 10 2012 220 792 A1 bekannte Wärmetauscheranordnung umfasst ein topfartiges äußeres Wärmetauschergehäuse mit einer Umfangswandung und einer Bodenwandung sowie ein in das äußere Wärmetauschergehäuse eingesetztes topfartiges inneres Wärmetauschergehäuse mit einer Umfangswandung und einer Bodenwandung. Zwischen den beiden Wärmetauschergehäusen ist ein Wärmeträgermedium-Strömungsraum für zu erwärmendes, flüssiges Wärmeträgermedium gebildet. An der Umfangswandung des äußeren Wärmetauschergehäuses sind eine Wärmeträgermedium-Eintrittsöffnung sowie eine Wärmeträgermedium-Austrittsöffnung in einem Gehäuse-Eintrittsstutzen bzw. einem Gehäuse-Austrittstutzen ausgebildet. Der Gehäuse-Eintrittsstutzen und der Gehäuse-Austrittsstutzen liegen, bezogen auf eine Gehäuselängsachse, im gleichen Längenbereich, also weisen zur Bodenwandung des äußeren Wärmetauschergehäuses den gleichen axialen Abstand auf, und liegen in Umfangsrichtung nebeneinander parallel, so dass die darin ausgebildeten Öffnungen zueinander parallele Öffnungslängsachsen aufweisen.

Zum Integrieren einer derartigen Wärmetauscheranordnung in den Wärmeträgermediumkreislauf werden z. B. schlauchartig ausgebildete Leitungen auf die am Gehäuse ausgebildeten Stutzen aufgeschoben und daran durch Schlauchschellen oder dergleichen festgelegt.

Eine Wärmetauscheranordnung gemäß dem Oberbegriff des Anspruchs 1 ist aus der DE 101 55 844 A1 bekannt. In ein Wärmetauschergehäuse dieser bekannten Wärmetauscheranordnung ist in eine Wärmeträgermedium-Eintrittsöffnung und eine Wärmeträgermedium-Austrittsöffnung jeweils ein Anschlussstutzen eingesetzt. Eine feste Verbindung der Anschlussstutzen mit dem Wärmetauschergehäuse wird durch Öffnungen in den Anschlussstutzen durchsetzende und in das Wärmetauschergehäuse eingeschraubten Schraubbolzen oder durch einen gemeinsamen mit dem Wärmetauschergehäuse verschraubten Flansch hergestellt.

Die US 5 271 646 A offenbart die Anbindung zweier in jeweilige Öffnungen eines Gehäuses eingesetzter Anschlussstutzen vermittels diesen jeweils zugeordneten, U-förmigen Arretierorganen. Die beiden U-Schenkel der Arretierorgane sind durch Öffnungen in dem Gehäuse hindurch in jeweilige Umfangsnuten der Anschlussstutzen eingreifend positioniert und halten dadurch die Anschlussstutzen fest am Gehäuse.

Die US 5 332 268 A offenbart eine Kopplungsvorrichtung zur Verbindung zweier an einem Tank vorgesehener Anschlussstutzen jeweils mit einer Schlauchleitung. Die Anschlussstutzen weisen an ihren voneinander abgewandt liegenden Seiten jeweils eine seitliche Aussparung auf, in welche ein die beiden Anschlussstutzen umgreifendes, U-förmiges Arretierorgan eingreifend positioniert werden kann. Dabei greift das Arretierorgan durch die Aussparungen hindurch in eine entsprechende Aussparung einer jeweiligen Schlauchleitung ein und hält somit die Schlauchleitung fest am zugeordneten Anschlussstutzen.

Die US 5 169 178 A offenbart eine Kopplungsvorrichtung zur Festlegung zweier Anschlussstutzen an einem plattenartigen Bauteil. Die beiden Anschlussstutzen werden durch Öffnungen in dem plattenartigen Bauteil hindurchgeführt, so dass an diesen jeweils vorgesehene Umfangsnuten an einer Seite des Bauteils frei liegen. Ein gemeinsames Arretierorgan weist in Zuordnung zu jedem der beiden Anschlussstutzen einen in die Umfangsnut eingreifend zu positionierenden Anschlussstutzen-Arretierbereich auf. Die beiden Anschlussstutzen-Arretierbereiche sind durch einen diese verbindenden Verbindungsabschnitt miteinander verbunden. Es ist die Aufgabe der vorliegenden Erfindung, eine Wärmetauscheranordnung, insbesondere für ein Fahrzeugheizgerät, vorzusehen, welche bei der Einbindung in einen Wärmeträgermediumkreislauf eine höhere Flexibilität bereitstellt. Erfindungsgemäß wird diese Aufgabe gelöst durch eine Wärmetauscheranordnung, insbesondere für ein Fahrzeugheizgerät, umfassend ein Wärmetauschergehäuse mit einer Wärmeträgermedium-Eintrittsöffnung und einer Wärmeträgermedium-Austrittsöffnung, ferner umfassend in Zuordnung zu wenigstens einer Öffnung von Wärmeträgermedium-Eintrittsöffnung und Wärmeträgermedium-Austrittsöffnung einen in die Öffnung eingesetzten oder einsetzbaren Anschlussstutzen, wobei in Zuordnung zu dem wenigstens einen Anschlussstutzen in dem Wärmetauschergehäuse wenigstens eine Gehäuse-Arretierorganeingriffsaussparung vorgesehen ist und in dem Anschlussstutzen wenigstens eine Anschlussstutzen-Arretierorganeingriffsaussparung vorgesehen ist, und wobei ein den Anschlussstutzen am Wärmetauschergehäuse arretierendes Arretierorgan in die wenigstens eine Gehäuse-Arretierorganeingriffsaussparung und die wenigstens eine Anschlussstutzen-Arretierorganeingriffsaussparung eingreifend positioniert oder positionierbar ist.

Durch das Bereitstellen von als separate Bauteile ausgebildeten Anschlussstutzen und das Arrieteren derselben an dem Wärmetauschergehäuse durch ein in jeweilige Eingriffsaussparungen eingreifendes und somit einen Formschluss herstellendes Arretierorgan, wird es möglich, derartige Anschlussstutzen einerseits schnell und zuverlässig mit dem Wärmetauschergehäuse zu koppeln, andererseits diese auch in einfacher Weise vom Wärmetauschergehäuse loslösen zu können.

Zum Minimieren der zum Aufbau der Wärmetauscheranordnung erforderlichen Bauteile ist vorgesehen, dass der in die Wärmeträgermedium-Eintrittsöffnung eingesetzte oder einsetzbare Anschlussstutzen und der in die Wärmeträgermedium-Austrittsöffnung eingesetzte oder einsetzbare Anschlussstutzen durch ein gemeinsames Arretierorgan am Wärmetauschergehäuse arretiert oder arretierbar sind, wobei das Arretierorgan in Zuordnung zu jedem Anschlussstutzen einen Anschlussstutzen-Arretierbereich aufweist und einen Gehäuse-Arretierbereich zum Arretieren des Arretierorgans bezüglich des Wärmetauschergehäuses in einem wenigstens einen Anschlussstutzen am Wärmetauschergehäuse arretierenden Arretierzustand aufweist.

Um ein ungewolltes Loslösen des Arretierorgans vom Wärmetauschergehäuse zu vermeiden, ist der Gehäuse-Arretierbereich die beiden Anschlussstutzen-Arretierbereiche miteinander verbindend im Wesentlichen U-förmig ausgebildet. Am Wärmetauschergehäuse ist ferner ein den Gegen-Arretierbereich im Arretierzustand hintergreifender Arretiervorsprung vorgesehen.

Für eine stabile Kopplung der Anschlussstutzen mit dem Wärmetauschergehäuse wird vorgeschlagen, dass das Wärmetauschergehäuse topfartig ausgebildet ist mit einer Umfangswandung und einer Bodenwandung, dass die Wärmeträgermedium-Eintrittsöffnung in einem an der Umfangswandung vorgesehenen Gehäuse-Eintrittsstutzen ausgebildet ist und die Wärmeträgermedium-Austrittsöffnung in einem an der Umfangswandung vorgesehenen Gehäuse-Austrittsstutzen ausgebildet ist, und dass in wenigstens einem Stutzen von Gehäuse-Eintrittsstutzen und Gehäuse-Austrittsstutzen wenigstens eine Gehäuse-Arretierorganeingriffsaussparung vorgesehen ist.

Eine zuverlässige Arretierung eines jeweiligen Anschlussstutzen in der diesen aufnehmenden Öffnung kann beispielsweise dadurch gewährleistet werden, dass bei wenigstens einem Stutzen von Gehäuse-Eintrittsstutzen und Gehäuse-Austrittsstutzen zwei einander gegenüberliegende Gehäuse-Arretierorganeingriffsaussparungen vorgesehen sind.

Um beim Einsetzen eines Anschlussstutzens in die diesen aufnehmende Öffnung eine definierte Positionierung für den Anschlussstutzen vorgeben zu können, kann vorgesehen sein, dass wenigstens ein, vorzugsweise jeder Anschlussstutzen einen Einschubanschlag aufweist, und dass bei in den zugeordneten Stutzen von Gehäuse-Eintrittsstutzen und Gehäuse-Austrittsstutzen eingeschobenem Anschlussstutzen der Einschubanschlag derart mit einem am Wärmetauschergehäuse vorgesehenen Gegen-Einschubanschlag zusammenwirkt, dass die wenigstens eine am Anschlussstutzen vorgesehene Anschlussstutzen-Arretierorganeingriffsaussparung zu der wenigstens einen Gehäuse-Arretierorganeingriffsaussparung fluchtend angeordnet ist und das Arretierorgan in die wenigstens eine Anschlussstutzen-Arretierorganeingriffsaussparung und die wenigstens eine Gehäuse-Arretierorganeingriffsaussparung eingreifend positioniert oder positionierbar ist.

Die Anbindung eines Anschlussstutzens an das Wärmetauschergehäuse kann in besonders einfacher Weise unterstützt werden, wenn bei wenigstens einem, vorzugsweise jedem Anschlussstutzen die wenigstens eine Anschlussstutzen-Arretierorganeingriffsaussparung durch eine vorzugsweise über den gesamten Umfang des Anschlussstutzens sich erstreckende Umfangsnut bereitgestellt ist.

Beispielsweise kann vorgesehen sein, dass wenigstens ein, vorzugsweise jeder Anschlussstutzen-Arretierbereich im Wesentlichen U-förmig ausgebildet ist und zwei jeweils in eine Gehäuse-Arretierorganeingriffsaussparung und eine Anschlussstutzen-Arretierorgan-Eingriffsaussparung eingreifend positionierte oder positionierbare Arretierschenkel aufweist.

Bei einem einfach zu realisierenden Aufbau kann das Arretierorgan aus vorzugsweise gebogenem Metallmaterial ausgebildet sein.

Um in einfacher Art und Weise das Zusammenwirken eines Arretierorgan mit zwei Anschlussstutzen zu gewährleisten, wird vorgeschlagen, dass die Wärmeträgermedium-Eintrittsöffnung und die Wärmeträgermedium-Austrittsöffnung am Wärmetauschergehäuse mit zueinander im Wesentlichen parallelen Öffnungslängsachsen vorgesehen sind.

Um die Integration der Wärmetauscheranordnung in einen Wärmeträgermediumkreislauf weiter zu erleichtern, wird vorgeschlagen, dass in wenigstens einer Öffnung von Wärmeträgermedium-Eintrittsöffnung und Wärmeträgermedium Austrittsöffnung ein Anschlussstutzen bei diesen arretierendem Arretierorgan drehbar aufgenommen ist.

Die vorliegende Erfindung wird nachfolgend mit Bezug auf die beiliegenden Figuren detailliert beschrieben. Es zeigt:
- Fig. 1: eine Seitenansicht eines Wärmetauschergehäuses;
- Fig. 2: eine teilweise geschnitten dargestellte Axialansicht des Wärmetauschergehäuses der Fig. 1, betrachtet in Blickrichtung II in Fig. 1;
- Fig. 3: eine der Fig. 1 entsprechende Ansicht des Wärmetauschergehäuses mit in dieses eingesetzten Anschlussstutzen;
- Fig. 4: eine der Fig. 2 entsprechende Ansicht des Wärmetauschergehäuses mit in dieses eingesetzten Anschlussstutzen;
- Fig. 5: in ihren Darstellungen a) und b) einen Anschlussstutzen in Seitenansicht und in Längsschnittansicht;
- Fig.6: ein Arretierorgan;

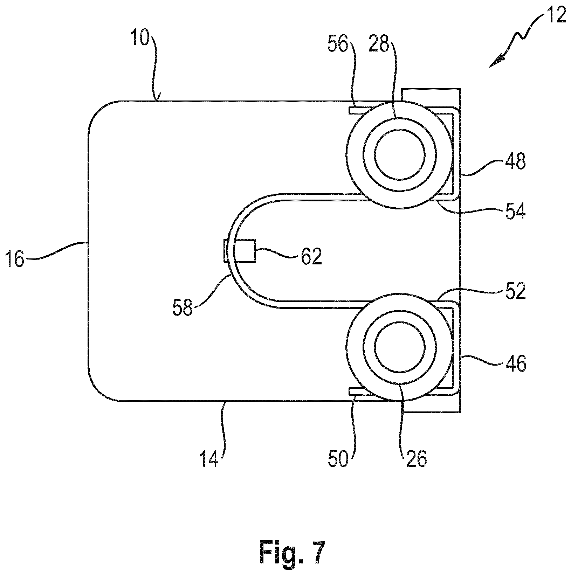

- Fig. 7: das Wärmetauschergehäuse der Fig. 3, betrachtet in Blickrichtung VII in Fig. 3.

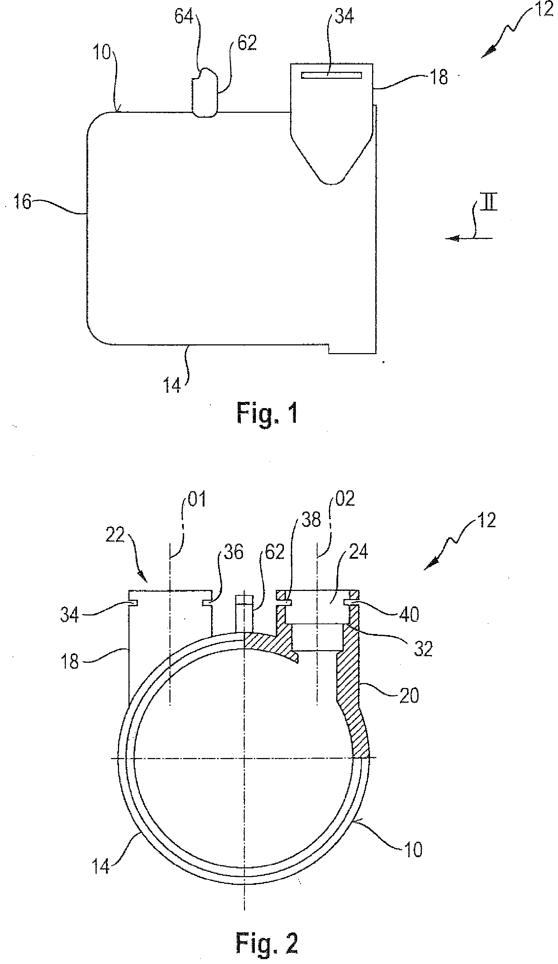

Die Fig. 1 und 2 zeigen ein allgemein mit 10 bezeichnetes Wärmetauschergehäuse einer Wärmetauscheranordnung 12 für ein beispielsweise mit Brennstoff betriebenes Fahrzeugheizgerät. Das beispielsweise aus Kunststoffmaterial oder Metallmaterial hergestellte Wärmetauschergehäuse 10 hat eine topfartige Struktur mit einer Umfangswandung 14 und einer daran anschließend bzw. integral damit ausgebildeten Bodenwandung 16. Das Wärmetauschergehäuse 10 bildet ein äußeres Wärmetauschergehäuse, in welches ein ebenfalls topfartig gestaltetes inneres Wärmetauschergehäuse eingesetzt werden kann, so dass diese beiden Wärmetauschergehäuse zusammen einen Strömungsraum für ein zu erwärmendes Wärmeträgermedium, beispielsweise die Kühlflüssigkeit in einem Kühlmittelkreislauf einer Brennkraftmaschine, bilden. An der in Fig. 1 rechts positionierten und in Fig. 2 in Draufsicht zu sehenden Seite ist die Wärmetauscheranordnung 12 zur Aufnahme bzw. zur Verbindung mit einer Brennerbaugruppe offen.

An der Umfangswandung 14 sind in Umfangsabstand zueinander und in gleichem Abstand zur Bodenwandung 16 ein Gehäuse-Eintrittsstutzen 18 und ein Gehäuse-Austrittsstutzen 20 vorzugsweise als integrale Bestandteile des Wärmetauschergehäuses 10 vorgesehen. In dem Gehäuse-Eintrittsstutzen 18 ist eine Wärmeträgermedium-Eintrittsöffnung 22 ausgebildet und zu dem durch das Wärmetauschergehäuse 10 umgebenen Volumen offen. In dem Gehäuse-Austrittsstutzen 20 ist eine Wärmeträgermedium-Austrittsöffnung 24 ausgebildet und zu dem von dem Wärmetauschergehäuse 10 umgebenen Volumen offen. Die Wärmeträgermedium Eintrittsöffnung 22 und die Wärmeträgermedium-Austrittsöffnung 24 weisen zueinander parallele Öffnungslängsachsen O1, O2 auf. Die beiden Öffnungen 22, 24 sind vorzugsweise zueinander im Wesentlichen gleich gestaltet bzw. dimensioniert.

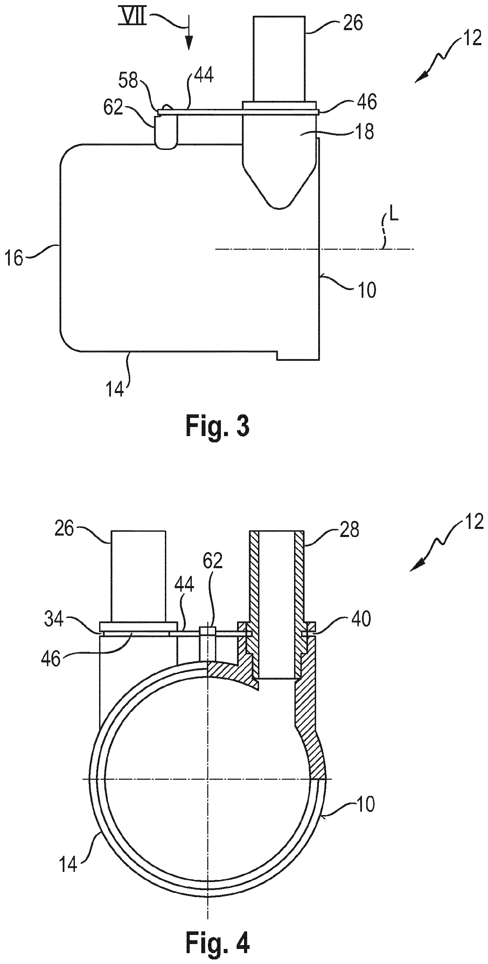

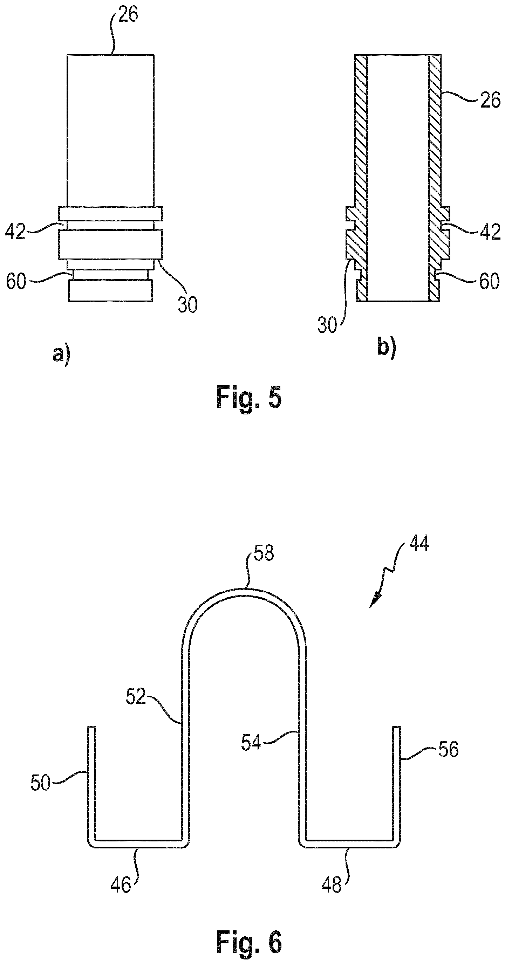

Die Fig. 3 und 4 zeigen das Wärmetauschergehäuse 10 mit in die beiden Öffnungen 22, 24 eingesetzten, beispielsweise aus Kunststoffmaterial oder Metallmaterial hergestellten Anschlussstutzen 26, 28. Die, ebenso wie die Öffnungen 22, 24, insbesondere in ihren in diese Öffnungen 22, 24 eingesetzten Bereichen zueinander im Wesentlichen gleich gestalteten Anschlussstutzen 26, 28 weisen jeweils einen in Fig. 5 auch erkennbaren Einschubanschlag 30 auf, der bei vollständig in eine jeweilige Öffnung 22,24 eingesetztem Anschlussstutzen 26, 28 an einem Gegen-Einschubanschlag 32 anliegt. Es ist in diesem Zusammenhang darauf hinzuweisen, dass die Fig. 5 in ihren beiden Darstellungen a) und b) beispielhaft für die beiden zueinander im Wesentlichen identisch aufgebauten Anschlussstutzen 26, 28 nur den Anschlussstutzen 26 zeigt. Dessen Wechselwirkung mit der diesen aufnehmenden Wärmeträgermedium-Eintrittsöffnung 22 entspricht der Wechselwirkung der den Anschlussstutzen 28 aufnehmenden Wärmeträgermedium-Austrittsöffnung 24 mit diesem.

In dem Gehäuse-Eintrittsstutzen 18 und dem Gehäuse-Austrittstutzen 20 sind an zwei bezüglich der jeweiligen Öffnungslängsachse O1, O2 einander gegenüberliegenden Seiten jeweils schlitzartig ausgebildete Gehäuse-Arretierorganeingriffsaussparungen 34, 36 bzw. 38, 40 ausgebildet. An jedem der Anschlussstutzen 26, 28 ist in dem jeweils in eine der Öffnungen 22, 24 einzusetzenden Längenbereich eine Anschlussstutzen-Arretierorganeingriffsaussparung 42 ausgebildet. Diese ist vorzugsweise als um den gesamten Außenumfang eines jeweiligen Anschlussstutzens 26, 28 umlaufende Nut ausgebildet. Bei in eine jeweilige Öffnung 22, 24 eingesetztem Anschlussstutzen 26, 28 liegt die jeweilige Anschlussstutzen-Arretierorganeingriffsaussparung 42 in Richtung der jeweiligen Öffnungslängsachse O1, O2 fluchtend mit den im zugeordneten Stutzen von Gehäuse-Eintrittsstutzen 18 und Gehäuse-Austrittsstutzen 20 ausgebildeten Gehäuse-Arretierorganeingriffsaussparungen und 34, 36 bzw. 38, 40. Da an jedem der Anschlussstutzen 26, 28 die Anschlussstutzen-Arretierorganeingriffsaussparung 42 als umlaufende Nut ausgebildet ist, muss auf eine besondere Drehpositionierung der Anschlussstutzen 26, 28 zum Erreichen dieser fluchtenden Anordnung nicht geachtet werden.

Die Fig. 6 zeigt ein beispielsweise aus einem Drahtmaterial gebogenes Arretierorgan 44. Das Arretierorgan 44 weist in Zuordnung zu jedem durch dieses zu arretierenden Anschlussstutzen 26, 28 einen Anschlussstutzen-Arretierbereich 46, 48 mit im Wesentlichen U-förmiger Gestalt auf. Jeder Anschlussstutzen-Arretierbereich 46, 48 weist zwei z.B. im Wesentlichen parallel zueinander liegende Arretierschenkel 50, 52 bzw. 54, 56 auf. Die Arretierschenkel 52, 54 fortsetzend ist ein im Wesentlichen ebenfalls U-förmiger Gehäuse-Arretierbereich 58 des Arretierorgans 44 vorgesehen.

Beim Zusammenbau des Wärmetauschergehäuses 10 mit den beiden Anschlussstutzen 26, 28 werden zunächst die Anschlussstutzen 26, 28 in die Wärmeträgermedium-Eintrittsöffnung 22 bzw. die Wärmeträgermedium-Austrittsöffnung 24 eingesetzt, bis ihre Einschubanschläge 30 an den Gegen-Einschubanschlägen 42 anliegen. Ein in einer weiteren Umfangsnut 60 der Anschlussstutzen 26, 28 aufgenommenes, beispielsweise O-ringartiges Dichtelement erzeugt in diesem Zustand einen fluiddichten Abschluss. Nachdem die beiden Anschlussstutzen 26, 28 in den Gehäuse-Eintrittsstutzen 18 bzw. den Gehäuse-Austrittsstutzen 20 eingesetzt wurden, wird das Arretierorgan 44 in der Darstellung der Figur 1 von rechts mit seinen Anschlussstutzen-Arretierbereich 46, 48 so auf den Gehäuse-Eintrittsstutzen 18 bzw. den Gehäuse-Austrittsstutzen 20 aufgeschoben, dass die Arretierschenkel 50, 52 in die Gehäuse-Arretierorganeingriffsaussparungen 34, 36 sowie die Anschlussstutzen-Arretierorganeingriffsaussparung 42 des Anschlussstutzens 26 eingreifen und die Arretierschenkel 54, 56 in die Gehäuse-Arretierorganeingriffsaussparungen 38, 40 sowie die Anschlussstutzen-Arretierorganeingriffsaussparung 42 des Anschlussstutzens 28 eingreifen. Durch die Gehäuse-Arretierbereiche 46, 48 wird somit eine formschlüssige Anbindung der Anschlussstutzen 26, 28 an das Wärmetauschergehäuse 10 erzeugt.

Bei vollständig aufgeschobenem Arretierorgan 44 und somit in Richtung der Gehäuselängsachse L an dem Gehäuse-Eintrittsstutzen 18 bzw. dem Gehäuse-Austrittsstutzen 20 anliegendem Anschlussstutzen-Arretierbereich 46, 48 hintergreift ein an der Umfangswandung 14 des Wärmetauschergehäuses 10 beispielsweise integral vorgesehener Arretiervorsprung den Gehäuse-Arretierbereich 58, so dass das Arretierorgan 44 in Richtung der Gehäuselängsachse L nicht bezüglich des Wärmetauschergehäuses 10 verschoben werden kann. In diesem Zustand kann das Arretierorgan 44 dadurch gebracht werden, dass es quer zur Aufschubrichtung, also quer zur Gehäuselängsachse L, ausgelenkt und mit seinem Gehäuse-Arretierbereich 58 über den Arretiervorsprung 62 hinweg bewegt wird. Ist das Arretierorgan 44 ausreichend weit über den Arretiervorsprung 62 hinweg bewegt, kann die dieses auslenkende Kraft aufgehoben werden, so dass unter seiner eigenen Vorspannung das Arretierorgan 44 in seine Ausgangsform zurückkehrt und in Anlage an einer Rastschräge 64 des Arretiervorsprungs 62 kommt. Das in seine Ausgangsform zurückkehrende Arretierorgan 44 erzeugt somit ein dieses in seine vollkommen aufgeschobene Stellung bewegende bzw. vorspannende Kraft.

Mit dem erfindungsgemäßen Aufbau einer Wärmetauscheranordnung ist es in einfacher Art und Weise möglich, die beispielsweise fest und stabil mit Anschlussleitungen verbundenen Anschlussstutzen 26, 28 mit der Wärmetauscheranordnung 12 zu verbinden, nachdem diese bzw. ein diese aufweisendes Heizgerät in ein Fahrzeug integriert wurde. Ebenso können die Anschlussstutzen und somit die damit verbundenen Anschlussleitungen in einfacher Art und Weise von der Wärmetauscheranordnung entkoppelt werden, wenn dies beispielsweise für Reparaturarbeiten erforderlich ist. Besonders vorteilhaft ist, dass auch bei angebrachtem Arretierorgan 44 die Anschlussstutzen 26, 28 in dem diese aufnehmenden Öffnungen 22, 24 grundsätzlich drehbar sind, so dass eine Zwängung von mit diesen verbundenen Leitungen vermieden wird.

Es sei abschließend darauf hingewiesen, dass selbstverständlich die beiden vorangehend beschriebenen und an dem Wärmetauschergehäuse ausgebildeten Stutzen hinsichtlich der Zufuhr bzw. Ableitung von Wärmeträgermedium auch vertauscht sein können.

## Patentansprüche

1. Wärmetauscheranordnung, insbesondere für ein Fahrzeugheizgerät, umfassend ein Wärmetauschergehäuse (10) mit einer Wärmeträgermedium-Eintrittsöffnung (22) und einer Wärmeträgermedium-Austrittsöffnung (24), ferner umfassend in Zuordnung zu wenigstens einer Öffnung von Wärmeträgermedium-Eintrittsöffnung (22) und Wärmeträgermedium-Austrittsöffnung (24) einen in die Öffnung eingesetzten oder einsetzbaren Anschlussstutzen (26, 28), wobei in Zuordnung zu dem wenigstens einen Anschlussstutzen (26, 28) in dem Wärmetauschergehäuse (10) wenigstens eine Gehäuse-Arretierorganeingriffsaussparung (34, 36, 38, 40) vorgesehen ist und in dem Anschlussstutzen (26, 28) wenigstens eine Anschlussstutzen-Arretierorganeingriffsaussparung (42) vorgesehen ist, und wobei ein den Anschlussstutzen (26, 28) am Wärmetauschergehäuse (10) arretierendes Arretierorgan (44) in die wenigstens eine Gehäuse-Arretierorganeingriffsaussparung (34, 36, 38, 40) und die wenigstens eine Anschlussstutzen-Arretierorganeingriffsaussparung (42) eingreifend positioniert oder positionierbar ist,
wobei der in die Wärmeträgermedium-Eintrittsöffnung (22) eingesetzte oder einsetzbare Anschlussstutzen (26) und der in die Wärmeträgermedium-Austrittsöffnung (24) eingesetzte oder einsetzbare Anschlussstutzen (28) durch ein gemeinsames Arretierorgan (44) am Wärmetauschergehäuse (44) arretiert oder arretierbar sind, wobei das Arretierorgan in Zuordnung zu jedem Anschlussstutzen (26, 28) einen Anschlussstutzen-Arretierbereich (46, 48) aufweist und einen Gehäuse-Arretierbereich (58) zum Arretieren des Arretierorgans (44) bezüglich des Wärmetauschergehäuses (10) in einem wenigstens einen Anschlussstutzen (26, 28) am Wärmetauschergehäuse arretierenden Arretierzustand aufweist, **dadurch gekennzeichnet dass** der Gehäuse-Arretierbereich (58) die beiden Anschlussstutzen-Arretierbereiche (46, 48) miteinander verbindend im Wesentlichen U-förmig ausgebildet ist, und dass am Wärmetauschergehäuse (10) ein den Gehäuse-Arretierbereich (58) im Arretierzustand hintergreifender Arretiervorsprung (62) vorgesehen ist.

2. Wärmetauscheranordnung nach Anspruch 1, **dadurch gekennzeichnet, dass** das Wärmetauschergehäuse (10) topfartig ausgebildet ist mit einer Umfangswandung (14) und einer Bodenwandung (16), dass die Wärmeträgermedium-Eintrittsöffnung (22) in einem an der Umfangswandung (14) vorgesehenen Gehäuse-Eintrittsstutzen (18) ausgebildet ist und die Wärmeträgermedium-Austrittsöffnung (24) in einem an der Umfangswandung (14) vorgesehenen Gehäuse-Austrittsstutzen (20) ausgebildet ist, und dass in wenigstens einem Stutzen von Gehäuse-Eintrittsstutzen (18) und Gehäuse-Austrittsstutzen (20) wenigstens eine Gehäuse-Arretierorganeingriffsaussparung (34, 36, 38, 40) vorgesehen ist.

3. Wärmetauscheranordnung nach Anspruch 2, **dadurch gekennzeichnet, dass** bei wenigstens einem Stutzen von Gehäuse-Eintrittsstutzen (18) und Gehäuse-Austrittsstutzen (20) zwei einander gegenüberliegende Gehäuse-Arretierorganeingriffsaussparungen (34, 36, 38, 40) vorgesehen sind.

4. Wärmetauscheranordnung nach Anspruch 2 oder 3, **dadurch gekennzeichnet, dass** wenigstens ein, vorzugsweise jeder Anschlussstutzen (26, 28) einen Einschubanschlag (30) aufweist, und dass bei in den zugeordneten Stutzen von Gehäuse-Eintrittsstutzen (18) und Gehäuse-Austrittsstutzen (20) eingeschobenem Anschlussstutzen (26, 28) der Einschubanschlag (30) derart mit einem am Wärmetauschergehäuse vorgesehenen Gegen-Einschubanschlag (32) zusammenwirkt, dass die wenigstens eine am Anschlussstutzen (26, 28) vorgesehene Anschlussstutzen-Arretierorganeingriffsaussparung (42) zu der wenigstens einen Gehäuse-Arretierorganeingriffsaussparung (34, 36, 38, 40) fluchtend angeordnet ist und das Arretierorgan (44) in die wenigstens eine Anschlussstutzen-Arretierorganeingriffsaussparung (34, 36, 38, 40) und die wenigstens eine Gehäuse-Arretierorganeingriffsaussparung (42) eingreifend positioniert oder positionierbar ist.

5. Wärmetauscheranordnung nach einem der vorangehenden Ansprüche, **dadurch gekennzeichnet, dass** bei wenigstens einem, vorzugsweise jedem Anschlussstutzen (26, 28) die wenigstens eine Anschlussstutzen-Arretierorganeingriffsaussparung (42) durch eine vorzugsweise über den gesamten Umfang des Anschlussstutzens (26, 28) sich erstreckende Umfangsnut bereitgestellt ist.

6. Wärmetauscheranordnung nach einem der vorangehenden Ansprüche, **dadurch gekennzeichnet, dass** wenigstens ein, vorzugsweise jeder Anschlussstutzen-Arretierbereich (46, 48) im Wesentlichen U-förmig ausgebildet ist und zwei jeweils in eine Gehäuse-Arretierorganeingriffsaussparung (34, 36, 38, 40) und eine Anschlussstutzen-Arretierorgan-Eingriffsaussparung (42) eingreifend positionierte oder positionierbare Arretierschenkel (50, 52, 54, 56) aufweist.

7. Wärmetauscheranordnung nach einem der vorangehenden Ansprüche, **dadurch gekennzeichnet, dass** das Arretierorgan (44) aus vorzugsweise gebogenem Metallmaterial ausgebildet ist.

8. Wärmetauscheranordnung nach einem der vorangehenden Ansprüche, **dadurch gekennzeichnet, dass** die Wärmeträgermedium-Eintrittsöffnung (22) und die Wärmeträgermedium-Austrittsöffnung (24) am Wärmetauschergehäuse (10) mit zueinander im Wesentlichen parallelen Öffnungslängsachsen (O1, O2) vorgesehen sind.

9. Wärmetauscheranordnung nach einem der vorangehenden Ansprüche, **dadurch gekennzeichnet, dass** in wenigstens einer Öffnung von Wärmeträgermedium-Eintrittsöffnung (22) und Wärmeträgermedium Austrittsöffnung (24) ein Anschlussstutzen (26, 28) bei diesen arretierendem Arretierorgan (44) drehbar aufgenommen ist.

## Claims

1. Heat exchanger arrangement, especially for a vehicle heater, comprising a heat exchanger housing (10) with a heat transfer medium inlet opening (22) and with a heat transfer medium outlet opening (24), further comprising, in association with at least one opening out of the heat transfer medium inlet opening (22) and the heat transfer medium outlet opening (24), a connecting piece (26, 28), which is inserted or can be inserted into the opening, wherein at least one housing locking element meshing recess (34, 36, 38, 40) is provided in association with the at least one connecting piece (26, 28) in the heat exchanger housing (10) and at least one connecting piece locking element meshing recess (42) is provided in the connecting piece (26, 28), and wherein a locking element (44) locking the connecting piece (26, 28) on the heat exchanger housing (10) is positioned or can be positioned such that it meshes with the at least one housing locking element meshing recess (34, 36, 38, 40) and with the at least one connecting piece locking element meshing recess (42), wherein
the connecting piece (26), which is inserted or can be inserted into the heat transfer medium inlet opening (22), and the connecting piece (28), which is inserted or can be inserted into the heat transfer medium outlet opening (24), are locked or can be locked at the heat exchanger housing (10) by a common locking element (44), wherein the locking element has, in association with each connecting piece (26, 28), a connecting piece locking area (46, 48) and a housing locking area (58) for locking the locking element (44) in relation to the heat exchanger housing (10) in a locked state locking at least one connecting piece (26, 28) at the heat exchanger housing, **characterized in that**
the housing locking area (58) has an essentially U-shaped configuration connecting the two connecting piece locking areas (46, 48) to one another, and that a locking projection (62), which engages behind the housing locking area (58) in the locked state, is provided on the heat exchanger housing (10).

2. Heat exchanger arrangement in accordance with claim 1, **characterized in that** the heat exchanger housing (10) has a pot-like configuration with a circumferential wall (14) and with a bottom wall (16), that the heat transfer medium inlet opening (22) is formed in a housing inlet pipe (18) provided on the circumferential wall (14) and the heat transfer medium outlet opening (24) is formed in a housing outlet pipe (20) provided on the circumferential wall (14), and that at least one housing locking element meshing recess (34, 36, 38, 40) is provided in at least one pipe out of the housing inlet pipe (18) and the housing outlet pipe (20).

3. Heat exchanger arrangement in accordance with claim 2, **characterized in that** two mutually opposite housing locking element meshing recesses (34, 36, 38, 40) are provided in at least one pipe out of the housing inlet pipe (18) and the housing outlet pipe (20).

4. Heat exchanger arrangement in accordance with claim 2 or 3, **characterized in that** at least one connecting piece (26, 28) and preferably each connecting piece (26, 28) has an insertion stop (30), and that with the connecting pieces (26, 28) inserted into the associated pipe out of the housing inlet pipe (18) and the housing outlet pipe (20), the insertion stop (30) interacts with a counter-insertion stop (32) provided on the heat exchanger housing such that the at least connecting piece locking element meshing recess (42) provided on the connecting piece (26, 28) is arranged aligned with the at least one housing locking element meshing recess (34, 36, 38, 40) and the locking element (44) is positioned or can be positioned such that it meshes with the at least one connecting piece locking element meshing recess (34, 36, 38, 40) and with the at least one housing locking element meshing recess (42).

5. Heat exchanger arrangement in accordance with one of the preceding claims, **characterized in that** the at least one connecting piece locking element meshing recess (42) is provided in at least one and preferably each connecting piece (26, 28) by a circumferential groove preferably extending over the entire circumference of the connecting piece (26, 28).

6. Heat exchanger arrangement in accordance with one of the preceding claims, **characterized in that** at least one and preferably each connecting piece locking area (46, 48) has an essentially U-shaped configuration and has two locking legs (50, 52, 54, 56) that are positioned or can be positioned such that they mesh with a housing locking element meshing recess (34, 36, 38, 40) and a connecting piece locking element meshing recess (42), respectively.

7. Heat exchanger arrangement in accordance with one of the preceding claims, **characterized in that** the locking element (44) is preferably made of a bent metallic material.

8. Heat exchanger arrangement in accordance with one of the preceding claims, **characterized in that** the heat transfer medium inlet opening (22) and the heat transfer medium outlet opening (24) on the heat exchanger housing (10) are provided with essentially parallel opening longitudinal axes (O1, 02).

9. Heat exchanger arrangement in accordance with one of the preceding claims, **characterized in that** a connecting piece (26, 28) is received rotatably at the locking element (44) locking the latter in at least one opening out of the heat transfer medium inlet opening (22) and the heat transfer medium outlet opening (24).

## Revendications

1. Arrangement d'échangeur de chaleur, en particulier pour un chauffage de véhicule, comprenant un boîtier d'échangeur de chaleur (10) avec une ouverture d'entrée de fluide caloporteur (22) et avec une ouverture de sortie de fluide caloporteur (24), comprenant en outre, en association avec au moins une ouverture parmi l'ouverture d'entrée de fluide caloporteur (22) et l'ouverture de sortie de fluide caloporteur (24), une pièce de raccordement (26, 28), qui est insérée ou peut être insérée dans l'ouverture, dans laquelle au moins un évidement d'engagement d'élément de verrouillage de boîtier (34, 36, 38, 40) est prévu en association avec ladite au moins une pièce de raccordement (26, 28) dans le boîtier d'échangeur de chaleur (10) et au moins un évidement d'engagement d'élément de verrouillage de pièce de raccordement (42) est prévu dans la pièce de raccordement (26, 28), et dans lequel un élément de verrouillage (44) verrouillant la pièce de raccordement (26, 28) sur le boîtier d'échangeur de chaleur (10) est positionné ou peut être positionné de telle sorte qu'il s'engrène avec ledit au moins un évidement d'engagement d'élément de verrouillage de boîtier (34, 36, 38, 40) et avec ledit au moins un évidement d'engagement d'élément de verrouillage de pièce de raccordement (42), dans lequel la pièce de raccordement (26), qui est insérée ou peut être insérée dans l'ouverture d'entrée de fluide caloporteur (22), et la pièce de raccordement (28), qui est insérée ou peut être insérée dans l'ouverture de sortie de fluide caloporteur (24), sont verrouillées ou peuvent être verrouillées au niveau du boîtier d'échangeur de chaleur (44) par un élément de verrouillage commun (44), dans lequel l'élément de verrouillage présente, en association avec chaque pièce de raccordement (26, 28), une zone de verrouillage de pièce de raccordement (46, 48) et une zone de verrouillage de boîtier (58) pour verrouiller l'élément de verrouillage (44) par rapport au boîtier d'échangeur de chaleur (10) dans un état verrouillé verrouillant au moins une pièce de raccordement (26, 28) sur le boîtier d'échangeur de chaleur, caractérisé en ce
la zone de verrouillage de boîtier (58) a une configuration essentiellement en forme de U reliant entre elles les deux zones de verrouillage de pièce de raccordement (46, 48), et qu'une saillie de verrouillage (62), qui s'étend derrière la zone de verrouillage de boîtier (58) à l'état verrouillé, est prévue sur le boîtier d'échangeur de chaleur (10).

2. Arrangement d'échangeur de chaleur selon la revendication 1, **caractérisée en ce que** le boîtier d'échangeur de chaleur (10) a une configuration en forme de pot avec une paroi périphérique (14) et avec une paroi de fond (16), que l'ouverture d'entrée de fluide caloporteur (22) est formée dans un tuyau d'entrée de boîtier (18) prévu sur la paroi circonférentielle (14) et l'ouverture de sortie de fluide caloporteur (24) est formée dans un tuyau de sortie de boîtier (20) prévu sur la paroi circonférentielle (14), et qu'au moins un évidement d'engagement d'élément de verrouillage de boîtier (34, 36, 38, 40) est prévu dans au moins un tuyau parmi le tuyau d'entrée de boîtier (18) et le tuyau de sortie de boîtier (20).

3. Arrangement d'échangeur de chaleur selon la revendication 2, **caractérisée en ce que** deux évidements d'engagement d'élément de verrouillage de boîtier (34, 36, 38, 40) opposés l'un à l'autre, sont prévus dans au moins un tuyau parmi le tuyau d'entrée de boîtier (18) et le tuyau de sortie de boîtier (20).

4. Arrangement d'échangeur de chaleur selon la revendication 2 ou 3, **caractérisée en ce qu'**au moins une pièce de raccordement et de préférence chaque pièce de raccordement (26, 28) présente une butée d'insertion (30), et **en ce que**, lorsque les pièces de raccordement (26, 28) sont insérées dans le tuyau correspondant parmi le tuyau d'entrée de boîtier (18) et le tuyau de sortie de boîtier (20), la butée d'insertion (30) coopère avec une contre-butée d'insertion (32) prévue sur le boîtier d'échangeur de chaleur de telle sorte que ledit un évidement d'engagement d'élément de verrouillage de pièce de raccordement (42) prévu sur la pièce de raccordement (26, 28) est disposé en alignement avec ledit au moins un évidement d'engagement d'élément de verrouillage de boîtier (34, 36, 38, 40) et l'élément de verrouillage (44) est positionné ou peut être positionné de telle sorte qu'il s'engrène avec ledit au moins un évidement d'engagement d'élément de verrouillage de pièce de raccordement (34, 36, 38, 40) et avec ledit au moins un évidement d'engagement d'élément de verrouillage de boîtier (42).

5. Arrangement d'échangeur de chaleur selon l'une des revendications précédentes, **caractérisée en ce que** ledit au moins un évidement d'engagement d'élément de verrouillage de pièce de raccordement (42) est prévu dans au moins une et de préférence dans chaque pièce de raccordement (26, 28) par une rainure périphérique s'étendant de préférence sur toute la circonférence de la pièce de raccordement (26, 28).

6. Arrangement d'échangeur de chaleur selon l'une des revendications précédentes, **caractérisée en ce qu'**au moins une et de préférence chaque zone de verrouillage de pièce de raccordement (46, 48) a une configuration essentiellement en forme de U et présente deux branches de verrouillage (50, 52, 54, 56) qui sont positionnées ou peuvent être positionnées de telle sorte qu'elles s'engrènent avec un évidement d'engagement d'élément de verrouillage de boîtier (34, 36, 38, 40) et un évidement d'engagement d'élément de verrouillage de pièce de raccordement (42), respectivement.

7. Arrangement d'échangeur de chaleur selon l'une des revendications précédentes, **caractérisée en ce que** l'élément de verrouillage (44) est de préférence constitué d'un matériau métallique plié.

8. Arrangement d'échangeur de chaleur selon l'une des revendications précédentes, **caractérisée en ce que** l'ouverture d'entrée de fluide caloporteur (22) et l'ouverture de sortie de fluide caloporteur (24) sur le boîtier d'échangeur de chaleur (10) sont pourvues d'axes longitudinaux d'ouverture essentiellement parallèles (O1, 02).

9. Arrangement d'échangeur de chaleur selon l'une des revendications précédentes, **caractérisée en ce qu'**une pièce de raccordement (26, 28) est prévue de manière rotative sur l'élément de verrouillage (44), verrouillant ce dernier dans au moins une ouverture parmi l'ouverture d'entrée de fluide caloporteur (22) et l'ouverture de sortie de fluide caloporteur (24).
